# EUROPEAN PATENT SPECIFICATION

(11) **EP 1 394 789 B1**
(45) Date of publication and mention of the grant of the patent: **25.06.2008**
(21) Application number: 03014597.3
(22) Date of filing: 08.07.2003
(51) Int. Cl.: G11B 11/00, G11B 9/00, G11B 9/02, G11B 9/08

(54) **Dielectric recording / reproducing head and tracking method**
Dielektrischer Aufnahme/Wiedergabekopf und Spurverfolgungsverfahren
Tête diélectrique d'enregistrement/lecture et méthode au suivi de piste

(30) Priority: 09.07.2002 JP 2002200122
(43) Date of publication of application: 03.03.2004
(60) Divisional application: 06124174.1
(73) Proprietor: Pioneer Corporation, Meguro-ku, Tokyo (JP); Cho, Yasuo, Sendai-shi, Miyagi (JP)
(72) Inventor: Onoe, Atsushi, Pioneer Corporation, Tsurugashima-shi, Saitama (JP); Cho Yasuo, Miyagi (JP)
(74) Representative: Reinhard - Skuhra - Weise & Partner

(56) References cited:
- EP-A- 0 398 656
- EP-A- 1 091 355
- US-A- 5 132 934
- US-A- 5 724 336
- US-A- 5 985 404
- PATENT ABSTRACTS OF JAPAN vol. 005, no. 009 (P-045), 21 January 1981 (1981-01-21) -& JP 55 139643 A (TOSHIBA CORP), 31 October 1980 (1980-10-31)

## Description

1. The present invention relates to a dielectric recording/reproducing head for a ferroelectric medium comprising recording/reproducing probe for recording information in the ferroelectric recording medium as a polarization direction by applying a first electric field to the ferroelectric recording medium by detecting a capacitance corresponding to the polarization direction of the ferroelectric recording medium by applying a second electric field; and a return electrode for returning the second electric field.

US-A-5132934 cf. the preamble of claim 1 discloses a piezoelectric cantilever arm with a tip for storing information on a substrate by applying an electric field between the tip and the substrate. The tip is pointed without extending in the longitudinal direction or the cross direction.

EP-A-0398656 describes a recording/reproducing apparatus where the recording and the reproduction of information is carried out by a radiation of laser light recording medium.

From EP-A-1091355 it is known to irradiate photoconductive region with light while injecting an electric charge into the charge accumulating region, whereat no dimensions are stated with respect to the recording head or its tip.

US-A-5985404 discloses recording medium suitable for use in high density, high capacity recording systems such as computers. Recording is carried out by applying a polarization reversal of a ferroelectric material.

US-A-5724336 relates to rotating mass storage devices and the fabrication of monolithic, integrated circuit devices containing field emitter tips and analogue and digital circuitry that is intimately connected to them. The field emitter tips are tiny, sharp-pointed devices formed by depositing method to form a cone with a sharp point.

The article "Scanning nonlinear dielectric microscopy with nanometer resolution" by Yasuo Cho et al., published in the Journal of the European Ceramic Society 21 (2001) pages 2131-2134 discloses a very high-resolution scanning nonlinear dielectric microscope (SNDM) with nanometer resolution that was developed for the observation of ferroelectric polarisation. The system setup of the SNDM uses an LC lumped constant resonator probe.

### Description of the Related Art

As high-density, large-capacity recording / reproducing apparatuses of randomly accessible type, there are known an optical disk apparatus and a hard disc drive (HDD) apparatus. Moreover, a recording / reproducing technique using a scanning nonlinear dielectric microscopy (SNDM) for the nanoscale analysis of a dielectric (ferroelectric) material has been recently proposed by the inventors of the present invention.

In the optical recording, an optical pickup with a laser as a light source is used. Data is recorded by forming pits that are concave-convex on a disk surface or forming the crystal phase of a phase shift medium. The recorded data is reproduced by using the difference in the reflectance between a crystal phase and an amorphous phase or using the magneto optical effect. However, the inertia of the pickup is relatively large, which is not appropriate for high-speed reading, and the size of the recording pit in using a focusing optical system, such as lens, is defined by the diffraction limit of light, so that its recording density is limited to 50 G bit/inch².

In the longitudinal recording of magnetic recording as represented by the HDD, a magnetic resistance (MR) head has been recently realized using giant magnetic resistance (GMR) and its recording density is expected to be larger than that of the optical disk by using perpendicular magnetic recording. However, the recording density is limited to 1 T bit/inch² due to thermal fluctuation of magnetic recording information and the presence of a Bloch wall in a portion in which a code or sign is reversed or changed, even if patterned media are used considering the above cause.

Using the SNDM to measure a non-linear dielectric constant of a ferroelectric material, it is possible to determine the plus and minus of a ferroelectric domain. Moreover, the SNDM is found to have sub-nanometer resolution using an electrically conductive cantilever which is provided with a small probe on its tip portion and which is used for an atomic force microscopy (AFM) or the like.

In the nanometer-scale analysis of the dielectric material using this SNDM, positioning is performed by controlling a piezo stage, as performed for the AFM apparatus. Moreover, using the high resolution of the SNDM, there is a possibility to realize a super-high-density recording / reproducing system with a ferroelectric substance as a medium, but in this case, it is necessary to generate and detect a control signal such as tracking signal, as performed for an optical disk apparatus and a magnetic disk apparatus.

However, the above-described SNDM has not been specially developed in view of a recording / reproducing apparatus, and there have not been presented any preferable method of and apparatus structure for generating and detecting the control signal such as tracking signal as presented for the optical disk apparatus and the magnetic disk apparatus.

It is therefore an object of the present invention to provide a dielectric recording / reproducing apparatus and a tracking method, which enable accurate tracking when recording or reproducing.

The above object of the present invention can be achieved by a dielectric recording / reproducing apparatus as defined in claim 1.

According to the dielectric recording / reproducing apparatus of the present invention, the tip portion of the recording / reproducing electrode has the first width larger than the width of the track of the recording medium. Therefore, if the tip portion of the recording / reproducing electrode is located exactly on or above the target track, the tip portion of the recording / reproducing electrode can cover the target track, a part of the adjacent track located on one side of the target track and a part of the adjacent track located on the other side of the target track. Therefore, not only data or information recorded on the target track, but also data or information recorded on the adjacent track(s) can be detected by the electrode at a time. The data or information recorded on the adjacent track(s) can be used for tracking control of the dielectric recording / reproducing head. The use of the data or information recorded on the adjacent track(s) makes the track control easy and accurate. Alternatively, if there is a space between the target track and the adjacent track(s), the tip portion of the recording / reproducing head can cover the target track, a part of the space located on one side of the target track and a part of the space located on the other side of the target track. Therefore, if the recording / reproducing electrode moves in the track width direction by a small amount, the position of the tip portion of the recording / reproducing electrode is still located on or above the target track, so that an on-track state (i.e. the state where the electrode correctly traces the target track) is kept. This means that tracking control becomes easy (i.e. it is possible to allow the relatively rough tracking control).

Incidentally, with respect to the shape of the recording / reproducing electrode, a pin shape or needle-shape, a cantilever-shape, and the like are known as specific structures. The electrode having these shapes is collectively referred to as the "probe" in the present application as occasion demands.

In one aspect of the dielectric, recording / reproducing apparatus of the present invention, the recording / reproducing probe has a cantilever shape.

According to this aspect, the probe has a cantilever shape, giving excellent flexibility as a probe.

In another aspect of the dielectric recording / reproducing apparatus of the present invention, the head is provided with a first tracking signal detection electrode for detecting a tracking signal.

According to this aspect, the electrode only for tracking error detection is provided. This electrode allows the tracking error detection with a good accuracy.

In another aspect of the dielectric recording / reproducing apparatus of the present invention, the first tracking signal detection electrode is placed in front of or behind the recording / reproducing electrode, deviating by half a track pitch in one direction along a track width direction.

According to this aspect, the electrode only for tracking error detection is placed bridging adjacent two tracks, so that tracking error is detected from a signal obtained from the two adjacent tracks, for example, a target track and a track adjacent to the target track. Therefore, easy and accurate tracking control can be achieved on the basis of this tracking error detection.

In another aspect of the dielectric recording / reproducing apparatus of the present invention, the head is further provided with a second tracking signal detection electrode for detecting a tracking signal. The second tracking signal detection electrode is placed in front of or behind the recording / reproducing electrode, deviating by half a track pitch in the opposite direction to said one direction.

According to this aspect, the head has the two electrodes only for tracking error detection. The first tracking signal detection electrode is placed at a portion deviating from the position of the recording / reproducing electrode by half a track pitch in one direction. The second tracking signal detection electrode is placed at a portion deviating from the position of the recording / reproducing electrode by half a track pitch in the opposite direction. The first tracking signal detection electrode can detect not only information or data recorded on the target track but also information or data recorded on the track adjacent to the target track in one direction. The second tracking signal detection electrode can detect not only information or data recorded on the target track but also information or data recorded on the track adjacent to the target track in the opposite direction. Base on these information or data, the amount of tracking error and the direction of tracking error are determined. Therefore, easy and accurate tracking control can be done on the basis of the tracking error detections.

The above object of the present invention can be achieved by a tracking method as defined in claim 8.

According to the tracking method of the present invention, the track control is performed by the tracking error signal obtained from the adjacent two tracks. As the recording / reproducing electrode has the tip portion with the width larger than the width of the track, the tracking error signal can be obtained from the adjacent two tracks at a time. Therefore, easy and accurate tracking control can be achieved on the basis of this tracking error signal. Incidentally, the direction of tracking error may be detected by using wobbling technique.

In this tracking method, a plurality of first pits each having a first polarity and a plurality of second pits each having a second polarity may be alternately arranged on each of the adjacent two tracks, and the location of the arrangement of the first pits and the second pits on one of the adjacent two track and the location of the arrangement of the first pits and the second pits on the other of the adjacent two tracks may be shifted each other at an angle of 90 degrees.

According to this aspect of the present invention, a first detection signal component having a predetermined frequency is obtained from one of the adjacent two tracks. This predetermined frequency corresponds to the arrangement of the first pits and the second pits on this track. Further, a second detection signal component having a predetermined frequency is obtained from the other of the adjacent two tracks. This predetermined frequency corresponds to the arrangement of the first pits and the second pits on this track. If the distance between the first pit and the second pit adjacent to each other on one of the adjacent two tracks is the same as that on the other of the adjacent two tracks, the predetermined frequency of the first detection signal component and the predetermined frequency of the second detection signal component are the same each other. However, the location of the arrangement of the first pits and the second pits on one of the adjacent two track and the location of the arrangement of the first pits and the second pits on the other of the adjacent two tracks are shifted each other at an angle of 90 degrees. Therefore, the phase of the first detection signal component and the phase of the second detection signal component are different from each other by an angle of 90 degrees. Based on the first detection signal component and the second detection signal component, the tracking error signal having the double frequency of the predetermined frequency of the first and second detection signal component can be obtained. By using this tracking error signal, easy and accurate tracking control can be carried out. Incidentally, the direction of error may be detected by using wobbling technique.

Moreover, in this tracking method, the tracking error signal is obtained by using a scanning nonlinear dielectric microscopy.

According to this aspect, the SNDM technique is applied to signal reproduction and tracking error signal detection. Tracking control is performed on the basis of the detected tracking error signal. The SNDM reproduction technique is introduced in detail by the present inventor, Yasuo Cho, in Oyo Butsuri Vol. 67, No. 3, p327 (1998). Alternatively, it is also described in detail in Japanese Patent Application No. 2001-274346 and No. 2001-274347, etc., filed by the present inventors. Namely, in this technique, the recording / reproducing electrode (e.g. a probe) scans over a dielectric (ferroelectric) substance to detect the polarization state of the dielectric (ferroelectric) substance. The capacitance corresponding to the polarization direction is detected, and this corresponds to recorded data. The data is recorded by applying an electric field to the dielectric (ferroelectric) substance from the probe, or to the probe from the lower electrode formed in the dielectric (ferroelectric) substance and thus making the polarization to be in a predetermined direction. Extremely high-density recording becomes possible.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1A is a plan view showing a first embodiment of a dielectric recording / reproducing head associated with the present invention;
FIG. 1B is an A1-A1 cross sectional view of FIG. 1A;
FIG. 2A is a plan view showing a second embodiment of the dielectric recording / reproducing head associated with the present invention;
FIG. 2B is an A2-A2 cross sectional view of FIG. 2A;
FIG. 3A is a plan view showing a third embodiment of the dielectric recording / reproducing head associated with the present invention;
FIG. 3B is an A3-A3 cross sectional view of FIG. 3A;
FIG. 4A is a plan view showing a first comparative example of the dielectric recording / reproducing head not covered by the present invention;
FIG. 4B is an A4-A4 cross sectional view of FIG. 4A;
FIG. 5A is a plan view showing a second comparative example of the dielectric recording / reproducing head not covered by the present invention;
FIG. 5B is an A5-A5 cross sectional view of FIG. 5A;
FIG. 6A is a plan view showing a third comparative example of the dielectric recording / reproducing head not covered by the present invention;
FIG. 6B is an A6-A6 cross sectional view of FIG. 6A;
FIG. 7A is a plan view showing an example of a ferroelectric recording medium;
FIG. 7B is an A7-A7 cross sectional view of FIG. 7A;
FIG. 8 is a schematic diagram to explain information recording/ reproducing with respect to a ferroelectric substance;
FIG. 9 is a schematic diagram showing a track structure example of the ferroelectric recording medium;
FIG. 10 is a schematic diagram showing the phase image and the amplitude image of the ferroelectric recording medium depending on the tracking state of a recording / reproducing head;
FIG. 11A to FIG. 11E are schematic diagrams showing one example of a tracking signal;
FIG. 12 is a schematic diagram showing one example of a detection circuit for detecting the tracking signal; and
FIG. 13 is a block diagram showing a block structure associated with recording / reproducing signal processing of a dielectric recording / reproducing apparatus.

### DETAILED DESCRIPTION OF THE PREFERRED EMBODIMENTS

### (Embodiments of Dielectric Recording / Reproducing Head)

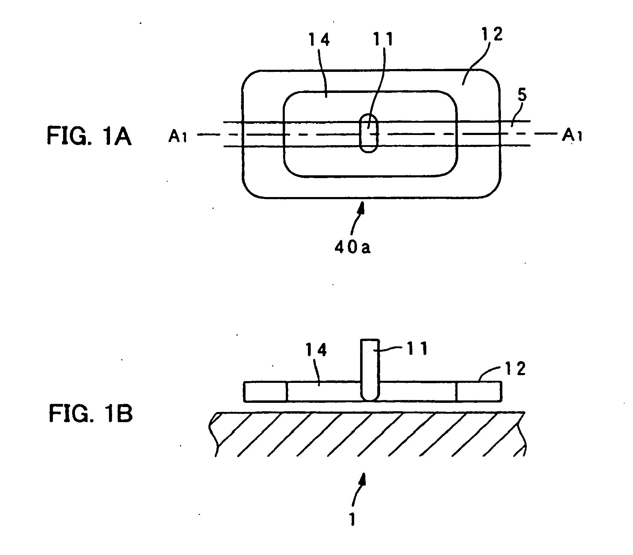

The embodiments of a dielectric recording / reproducing head associated with the present invention will be explained with reference to FIG. 1 to FIG. 6.

### (First Embodiment)

FIG. 1A is a plan view showing the first embodiment. FIG. 1B is an A1-A1 cross sectional view of FIG. 1A. As shown in FIG. 1A and FIG. 1B, a dielectric recording / reproducing head 40a is provided with: a probe 11 for recording / reproducing data in / from a ferroelectric recording medium 1; and a slider 12 placed so as to surround the probe 11 and containing an electric conductor. The head 40a may be further provided with a probe supporting device 14 containing an insulating member such as resin materials in the gap between the probe 11 and the slider 12.

The probe 11 has a longitudinal shape with a longer length in the width direction of the track 5, and covers the track 5 and one portion of adjacent spaces. Therefore, if tracking error is small, the probe 11 is not off the track 5, so that it is possible to reproduce a signal with a good signal to noise (S / N) ratio. If the tracks 5 are placed adjacently, the signal component of the adjacent tracks can be sensitively detected as a tracking error signal. The direction of tracking error can be determined by using wobbling technique, for example.

The slider 12 can be used, by earthing it, as a return electrode for returning a high-frequency electric field applied from the probe 11 to the ferroelectric recording medium 1 in order to reproduce a signal.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

The probe supporting device 14 is, for example, a resin molding member. The probe supporting device 14 holds the probe 11 therein and fixes the position of the probe 11 in the inside of the slider 12. Therefore, the position of the tip of the probe 11 is firmly fixed, so that accuracy of the data recording and the data reading can be improved.

### (Second Embodiment)

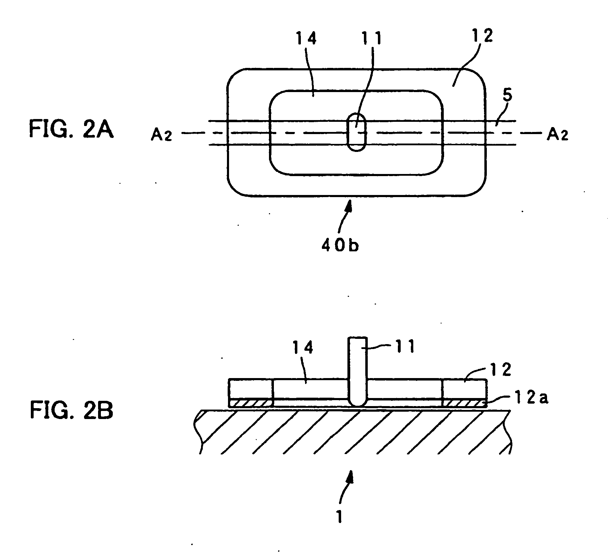

FIG. 2A is a plan view showing the second embodiment. FIG. 2B is an A2-A2 cross sectional view of FIG. 2A. As shown in FIG. 2A and FIG. 2B, a dielectric recording / reproducing head 40b is provided with: the probe 11 for recording / reproducing data in / from the ferroelectric recording medium 1; and the slider 12 placed so as to surround the probe 11 and containing an insulator. The head 40b may be further provided with the probe supporting device 14 containing an insulating member such as resin materials in the gap between the probe 11 and the slider 12. Moreover, it is provided with a conductive film 12a on a surface of the slider 12 facing to the ferroelectric recording medium 1. The slider 12 and the probe supporting device 14 may be formed in one piece.

The probe 11 has a longitudinal shape with a longer length in the width direction of the track 5, and covers the track 5 and one portion of adjacent spaces. Therefore, if tracking error is small, the probe 11 is not off the track 5, so that it is possible to reproduce a signal with a good S / N ratio. If the tracks 5 are placed adjacently, the signal component of the adjacent tracks can be sensitively detected as a tracking error signal. The direction of tracking error can be detemined by using wobbling technique, for example.

The conductive film 12a can be used, by earthing it, as a return electrode for returning a high-frequency electric field applied from the probe 11 to the ferroelectric recording medium 1 in order to reproduce a signal.

Moreover, the probe 11 is set not to project from a surface of the conductive film 12a facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (Third Embodiment)

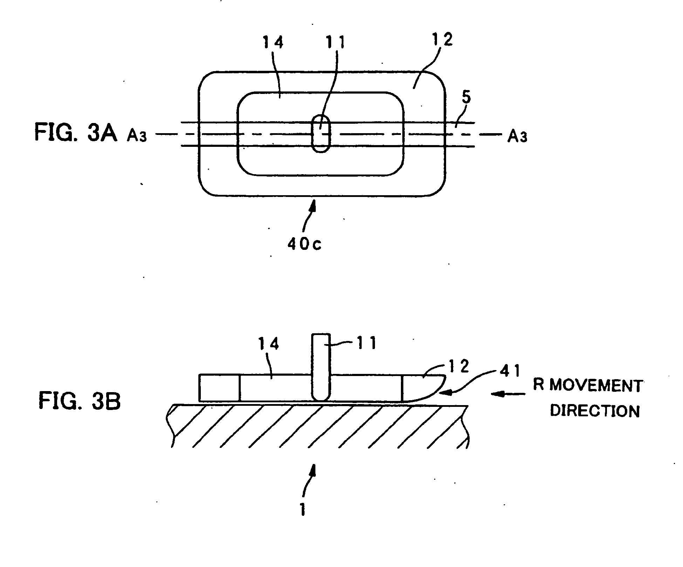

FIG. 3A is a plan view showing the third embodiment. FIG. 3B is an A3-A3 cross sectional view of FIG. 3A. As shown in FIG. 3A and FIG. 3B, a dielectric recording / reproducing head 40c is provided with: the probe 11 for recording / reproducing data in / from the ferroelectric recording medium 1; and the slider 12 placed so as to surround the probe 11. The head 40c may be further provided with the probe supporting device 14 containing an insulating member such as resin materials in the gap between the probe 11 and the slider 12.

An end surface 41 of the slider 12, which is located against the direction that the ferroelectric recording medium 1 relatively moves, i.e. the direction shown with an arrow R, is an inclined plane, which adjusts air flows generated by the movement of the ferroelectric recording medium 1 and which stabilizes the posture of the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as the return electrode.

The probe 11 has a longitudinal shape with a longer length in the width direction of the track 5, and covers the track 5 and one portion of adjacent spaces. Therefore, if tracking error is small, the probe 11 is not off the track 5, so that it is possible to reproduce a signal with a good S / N ratio. If the tracks 5 are placed adjacently, the signal component of the adjacent tracks can be sensitively detected as a tracking error signal. The direction of tracking error can be determined by using wobbling technique, for example.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (First Comparative Example)

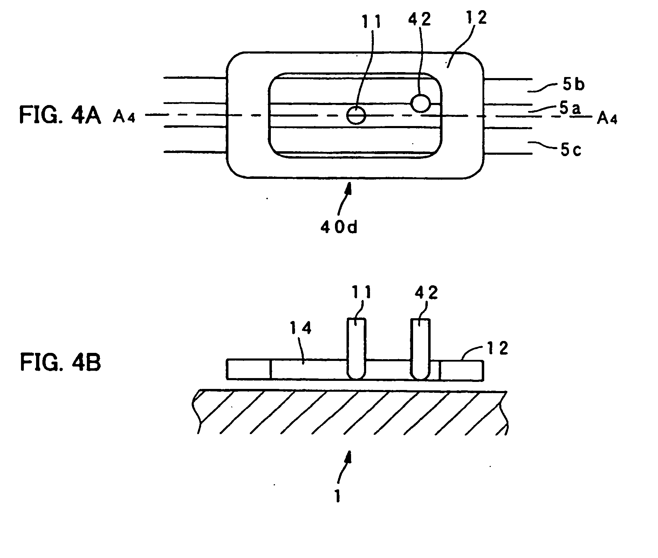

FIG. 4A is a plan view showing a first comparative example. FIG. 4B is an A4-A4 cross sectional view of FIG. 4A. As shown in FIG. 4A and FIG. 4B, a dielectric recording / reproducing head 40d is provided with: the probe 11 for recording / reproducing data in / from the ferroelectric recording medium 1; a tracking error detection electrode 42 placed bridging adjacent tracks 5a and 5b; and the slider 12 placed so as to surround the probe 11 and the tracking error detection electrode 42. The head 40d may be further provided with the probe supporting device 14 containing an insulating member such as resin materials in the gap among the probe 11, the tracking error detection electrode 42, and the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as the return electrode.

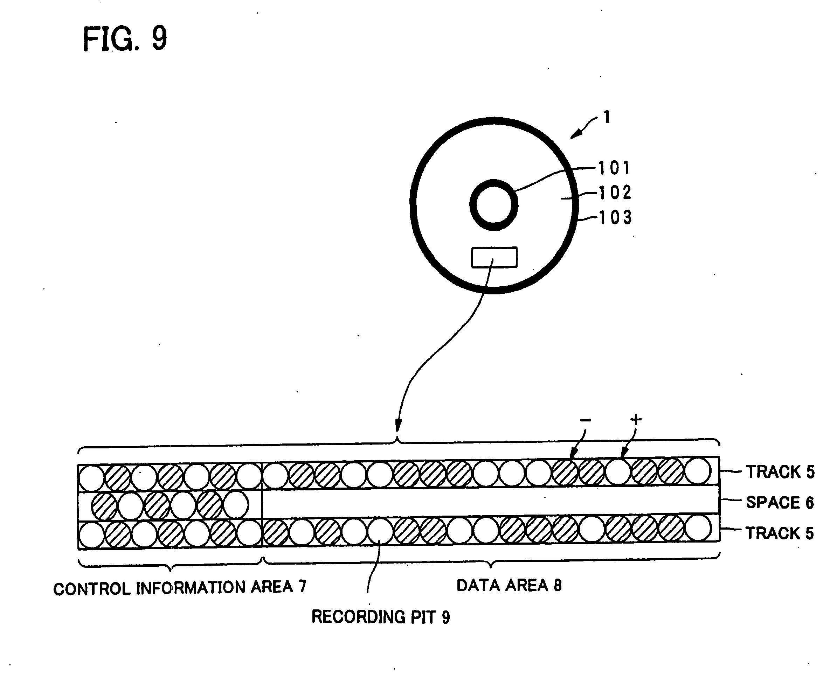

Using the tracking error detection electrode 42 placed bridging the adjacent tracks 5a and 5b, the amount of tracking error and the direction of error can be detected from signal components of the tracks 5a and 5b. For example, forming pits in a control information area 7 (shown in FIG. 9) according to a predetermined rule, the detection of these can be performed.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (Second Comparative Example)

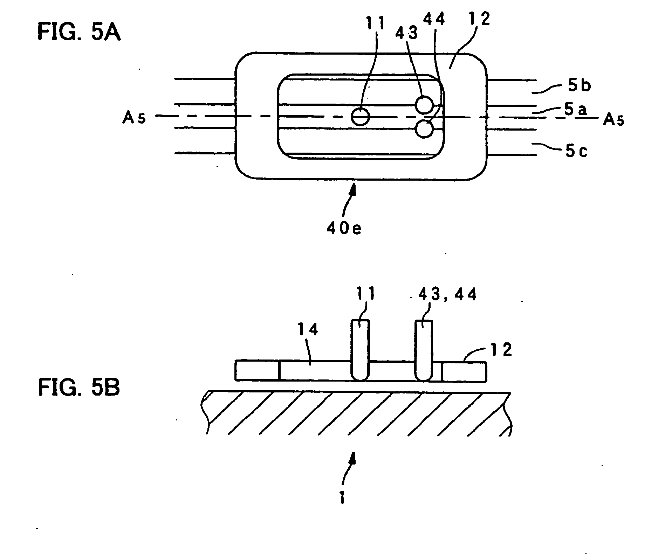

FIG. 5A is a plan view showing a second comparative example. FIG. 5B is an A5-A5 cross sectional view of FIG. 5A. As shown in FIG. 5A and FIG. 5B, a dielectric recording / reproducing head 40e is provided with: the probe 11 for recording / reproducing data in / from the ferroelectric recording medium 1; a tracking error detection electrode 43 placed in front of the probe 11, bridging adjacent tracks 5a and 5b; a tracking error detection electrode 44 placed in front of the probe 11, bridging adjacent tracks 5a and 5c; and the slider 12 placed so as to surround the probe 11 and the tracking error detection electrodes 43 and 44. The head 40e may be provided with the probe supporting device 14 containing an insulating member such as resin materials in the gap among the probe 11, the tracking error detection electrodes 43 and 44, and the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as a return electrode for returning a high-frequency electric field applied from the probe 11 to the ferroelectric recording medium 1 in order to reproduce a signal.

Using the tracking error detection electrode 43 placed bridging the adjacent tracks 5a and 5b, a tracking error signal can be detected from signal components of the tracks 5a and 5b. Moreover, using the tracking error detection electrode 44 placed bridging the adjacent tracks 5a and 5c, a tracking error signal can be detected from signal components of the tracks 5a and 5c. The tracking error detection electrodes 43 and 44 are placed correspondingly to the inner and outer sides of the track 5a, so that the amount of tracking error and the direction of error can be detected by comparing their outputs.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

### (Third Comparative Example)

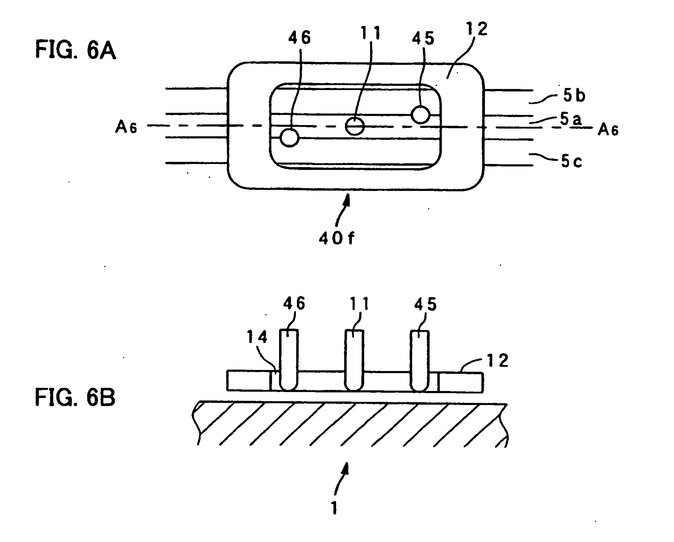

FIG. 6A is a plan view showing a third comparative example. FIG. 6B is an A6-A6 cross sectional view of FIG. 6A. As shown in FIG. 6A and FIG. 6B, a dielectric recording / reproducing head 40f is provided with: the probe 11 for recording / reproducing data in / from the ferroelectric recording medium 1; a tracking error detection electrode 45 placed bridging adjacent tracks 5a and 5b; a tracking error detection electrode 46 placed bridging adjacent tracks 5a and 5c; and the slider 12 placed so as to surround the probe 11 and the tracking error detection electrodes 45 and 46. The head 40f may be further provided with the probe supporting device 14 containing an insulating member such as resin materials in the gap among the probe 11, the tracking error detection electrodes 45 and 46, and the slider 12.

The slider 12 can be used, by containing an electric conductor and earthing it, as a return electrode for returning a high-frequency electric field applied from the probe 11 to the ferroelectric recording medium 1 in order to reproduce a signal. Moreover, if the slider 12 and the probe supporting device 14 are formed in one piece using an insulating member and a conductive film is provided on a surface of the slider 12 facing to the ferroelectric recording medium 1, this conductive film can be used, by earthing it, as a return electrode for returning a high-frequency electric field applied from the probe 11 to the ferroelectric recording medium 1 in order to reproduce a signal.

Using the tracking error detection electrode 45 placed in front of the probe 11, bridging the adjacent tracks 5a and 5b, a tracking error signal can be detected from signal components of the tracks 5a and 5b. Moreover, using the tracking error detection electrode 46 placed behind the probe 11, bridging the adjacent tracks 5a and 5c, a tracking error signal can be detected from signal components of the tracks 5a and 5c. The tracking error detection electrodes 45 and 46 are placed correspondingly to the inner and outer sides of the track 5a, so that the amount of tracking error and the direction of error can be detected by comparing their outputs.

The tracking error detection electrodes 45 and 46 are placed in front of and behind the probe 11, respectively, so that even if the track pitch are different from the pitch between the electrodes 45 and 46, it is possible to match the pitches by rotating the head 40f while setting the position of the probe 11 as the axis.

Moreover, the probe 11 is set not to project from a surface of the slider 12 facing to the ferroelectric recording medium 1. Due to this setting, it is possible to prevent the destruction of the probe 11 and the damage to the ferroelectric recording medium 1 caused by the probe 11 touching the ferroelectric recording medium 1.

The slider 12 in the above-described each embodiment may be provided with an appropriate groove or concave formed on its surface facing to the ferroelectric recording medium 1. The groove of this kind, for example, allows more proper control of a space between the slider 12 and the ferroelectric recording medium 1.

### (Embodiment of Dielectric Recording Medium)

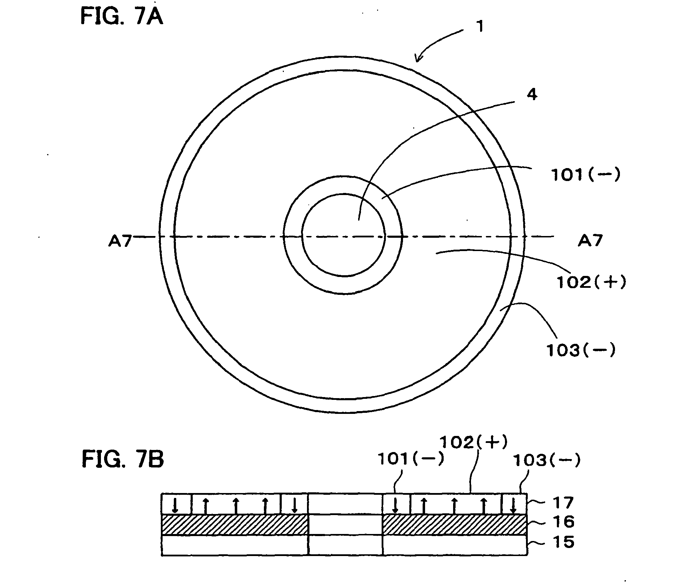

Explaining one example of the ferroelectric recording medium in which recording / reproducing is performed using the dielectric recording / reproducing head of the present invention, as shown in FIG. 7A, the ferroelectric recording medium 1 in a disc form is provided with: a center hole 4; an inner area 101; a recording area 102; and an outer area 103, arranged concentrically from the inside in this order. The center hole 4 is used when the medium is mounted on a spindle motor or the like.

The inner area 101, the recording area 102, and the outer area 103 contain a uniform and flat ferroelectric material. If the recording area 102 has an up polarization direction, i.e. being a plus surface, the inner area 101 and the outer area 103 have down polarization directions, i.e. being polarized into a minus surface in advance.

The recording area 102 is an area for recording data therein. The tracks and spaces are formed in the recording area 102. Each space is located between two of the tracks. At several or many portions on the tracks or spaces, areas in which control information about the recording / reproducing is recorded are formed. The inner area 101 and the outer area 103 are used to recognize the inner and outer positions of the ferroelectric recording medium 1 and can be also used as an area in which information about recording data, such as title, its address, recording time, and recording capacity, is recorded.

As shown in FIG. 7B, the ferroelectric recording medium 1 is provided with: a substrate 15; an electrode 16 laminated on the substrate 15; and a ferroelectric material 17 laminated on the electrode 16. The inner area 101, the recording area 102 and the outer area 103 are independently polarized in the directions shown with arrows.

The substrate 15 may be Si, for example, which is a preferable material due to its strength, chemical stability, workability, and the like. The electrode 16 is intended to generate an electric field between the electrode 16 and the probe of a recording / reproducing head and applies to the ferroelectric material 17 an electric field stronger than its coercive electric field to determine the polarization direction. Data is recorded by determining the polarization direction correspondingly to the data. Incidentally, the probe is an electrode, which is provided for the recording / reproducing head, for applying an electric field to the ferroelectric material 17, and a pin shape or needle-shape, a cantilever-shape and the like are known as its specific structures. The probe used here functions as an electrode for recording / reproducing data in / from the ferroelectric recording medium, and any shaped probe, even other than the pin shape and the cantilever shape, e.g. a thin film electrode, can be used.

As the ferroelectric material 17, LiTaO₃ may be used, for example. The recording is performed with respect to the Z surface of the LiTaO₃, where a plus surface and a minus surface of the polarization are in a 180-degree domain relationship. Alternatively, other ferroelectric materials may be used.

Moreover, the ferroelectric recording medium of the present invention may have only the recording area 102. It is also possible to divide the recording area 102 of the ferroelectric recording medium 1 into a plurality of concentric areas. In this case, a separation zone is placed between the divided recording areas adjacent to each other, and the polarization direction in the separation zone is set in the opposite direction to that in each divided recording area (e.g. it is set in the same direction as that in the inner area 101 and the outer area 103. Incidentally, the ferroelectric recording medium is not limited to the above-described disc formed medium, but may be available to a medium provided with linear tracks, for example.

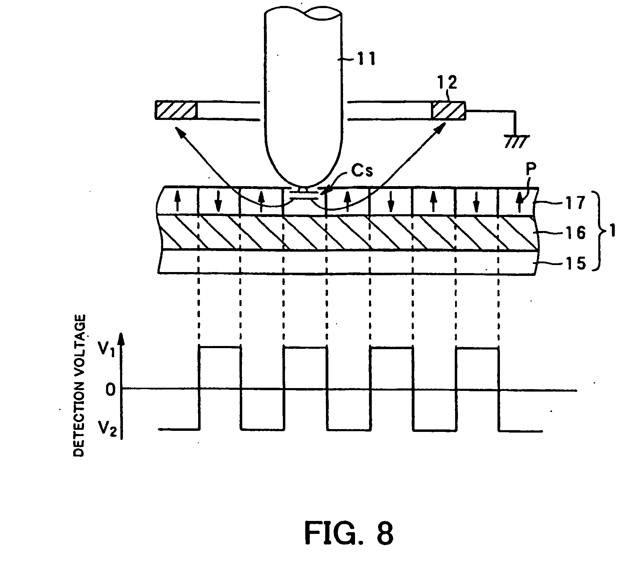

Next, the recording / reproducing principle of the above-described ferroelectric recording medium 1 will be explained with reference to FIG. 8. A ferroelectric recording medium 1 is provided with: the substrate 15; the electrode 16 placed on the substrate 15; and the ferroelectric material 17 placed on the electrode 16. Data is recorded in the ferroelectric material 17 as it polarization directions P.

When an electric field stronger than the coercive electric field of the ferroelectric material 17 is applied between a probe 11 and the electrode 16, the ferroelectric material 17 is polarized in a direction corresponding to the direction of the applied electric field. The polarization direction corresponds to the data. A return electrode 12b is an electrode for returning a high-frequency electric field applied to the ferroelectric material 17 from the probe 11 so as to reproduce recorded data and is placed so as to surround the probe 11. Incidentally, the return electrode 12b may be in any form if shaped and placed to allow the return of the electric field from the probe 11 without resistance.

Next, an example of the tracks provided in the recording area 102 of the ferroelectric recording medium 1 described above will be explained with reference to FIG. 9. Tracks 5 and spaces 6 are alternately placed concentrically or spirally. At several or many portions on each track, control information areas 7 and data areas 8 are formed. The control information areas 7 may be formed in the spaces 6. In the track 5 and the space 6 in their initial state, polarization directions are set in up direction and their surface is positive. Further, when data is recorded in such a condition that a data bit "1" corresponds to the positive direction of the polarization, and a data bit "0" corresponds to the negative direction of the polarization. Therefore, the data bit "0" is recorded by applying an electric field in the negative direction stronger than the coercive electric field, while the data bit "1" is recorded by performing no modification. Alternatively, the polarization directions for the data bit "1" and the data bit "0" may be opposite.

In the control information area 7, there are recorded information about tracking, information about track access, information about a relative movement rate between the probe and the ferroelectric recording medium 1 and the like. It is also possible to provide a plurality of control information areas 7 on the same circle.

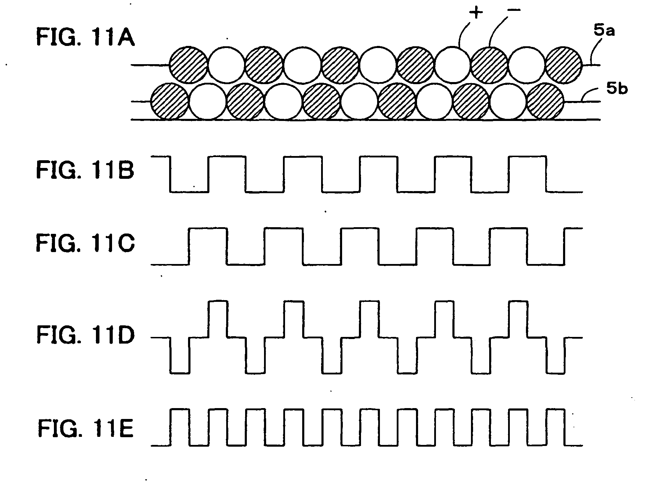

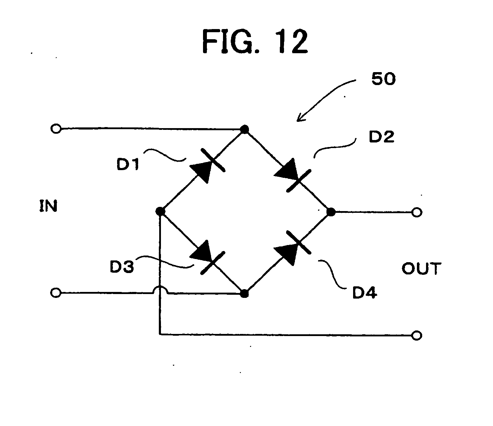

Especially, in one example of the information about tracking, as shown in the control information areas 7 in FIG. 9, signal lines in which pits having plus surfaces and minus surfaces are alternately placed are arranged with the phase of pit lines shifted at an angle of 90 degrees in the track 5 and space 6 adjacent to each other. The ferroelectric recording medium in a format having only the tracks 5 has the same arrangement between the adjacent tracks 5. Since the probe 11 traces the control information area 7 having this type of signal arrangement, a recording frequency component twice as high (or a double recording frequency component) is outputted when deviating from the target track. Detecting the size of this frequency component and the track deviation direction, it is possible to perform tracking control. This will be explained in detail later with reference to FIGs. 11 and FIG. 12.

### (Embodiment about Tracking Method)

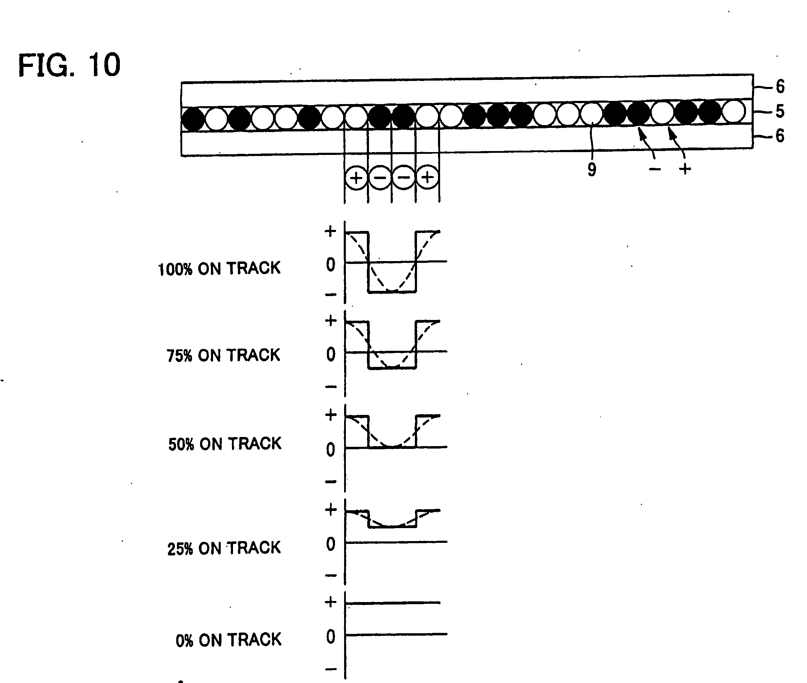

Next, one example of tracking control will be explained with reference to FIG. 10 to FIG. 12.

FIG. 10 is a schematic diagram showing the phase image and the amplitude image depending on the tracking state of the recording / reproducing head, in which the spaces 6 are provided on the both side of the track 5, sandwiching it. The spaces 6 are polarized in the positive direction, and the track 5 has pits 9 polarized in the positive direction correspondingly to data bits "1" and pits 9 polarized in the negative direction correspondingly to data bits "0". The graphs show the phase image and the amplitude image in a portion with data arranged in the order of plus, minus, minus and plus. Although the respective five graphs show the phase image and the amplitude image in the same portion, "ON track" state is different in each graph. "On track" state means a state in which the probe follows the track without being off the track or out of position. When the positional relationship between the probe and the track maintains exactly, "On track" state is 100%. In five graphs in FIG. 5, the "ON track" state of the probe 11 is 100%, 75%, 50%, 25% and 0% from the top. The solid line shows the phase image, and the dotted line shows the amplitude image. The output of the phase image is very sharp, so that the phase image can be preferably used for the tracking control. The phase image shows the signal component of phase information in a reproduction signal reproduced by the SNDM. This corresponds to the plus and minus of the polarization direction corresponding to recorded data. The amplitude image shows a signal including not only a phase component but also an intensity component in the reproduction signal reproduced by the SNDM, and the latter is closer to the raw data of the reproduction signal.

Next, the detection of tracking error will be explained in the case of alternately placing pits having plus surfaces and minus surfaces in the adjacent tracks 5, or in the tracks 5 and the spaces 6, with the phase of pit lines shifted at an angle of 90 degrees. FIG. 11A shows that pits for detecting tracking error are provided in the control information areas 7 of the adjacent tracks 5a and 5b. The pits having plus surfaces and minus surfaces are alternately placed with the phase of pit lines shifted at an angle of 90 degrees between tracks 5a and 5b. Information about these is recorded in the control information area 7 of the ferroelectric recording medium 1, for example.

FIG. 11B shows an output waveform of the track 5a, and FIG. 11C shows an output waveform of the track 5b. As compared with these two waveforms, their phases are shifted at an angle of 90 degrees. Assuming that the probe 11 deviates from the track and traces between the tracks 5a and 5b, the output obtained is as shown in FIG. 11D. From this signal, a double frequency output can be obtained, as shown in FIG. 11E, by a diode bridge circuit 50 in FIG. 12. Tracking control is performed on the basis of this double frequency output. Incidentally, the direction of tracking error can be detected by wobbling which is the same technique as that used for an optical disk or the like, for example.

As shown in FIG. 12, the diode bridge circuit 50 has diodes D1 to D4 connected to a bridge, forming a so-called rectifier circuit. The signal shown in FIG. 11D is inputted between the connection point of the diodes D1 and D2 and the connection point of the diodes D3 and D4, and the signal shown in FIG. 11E is outputted from between the connection point of the diodes D1 and D3 and the connection point of the diodes D2 and D4.

Other than the above-explained tracking method, it is also possible to use a method of performing tracking control on the basis of an output from an electrode provided only for detecting tracking error, and wobbling technique generally used for an optical disk. (Structure Example of Dielectric Recording / Reproducing Apparatus to which Dielectric Recording / Reproducing Head and Tracking Method are applied)

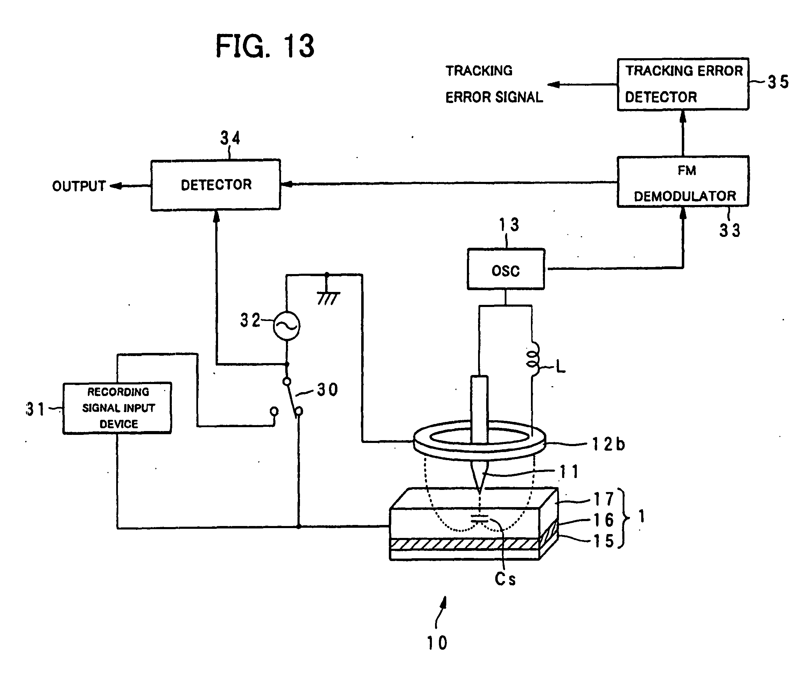

One example of a dielectric recording / reproducing apparatus to which the dielectric recording / reproducing head and the tracking method associated with the present invention are applied will be explained with reference to FIG. 13. Incidentally, a recording / reproducing apparatus using a ferroelectric recording medium provided with linear recording tracks can be also constructed by using a mechanism in which its probe and ferroelectric recording medium are moved linearly and relatively.

A dielectric recording / reproducing apparatus 10 is provided with: the probe 11 for applying an electric field with its tip portion facing to the ferroelectric material 17 of the ferroelectric recording medium 1; the return electrode 12b for returning the electric field applied form the probe 11; an inductor L placed between the probe 11 and the return electrode 12b; an oscillator 13 which oscillates at a resonance frequency determined from the inductor L and a capacitance (e.g. a capacitance Cs shown in FIG. 8) in a portion formed in the ferroelectric material just under the probe 11 and polarized correspondingly to recorded data; a switch 30 for switching an input signal when recording; a recording signal input device 31 for converting data to be recorded to generate a signal for recording; an alternating current (AC) signal generation device 32 for generating an alternating current (AC) signal which is referred to in coherent detection; a frequency modulation (FM) demodulator 33 for demodulating a FM modulation signal modulated by the capacitance corresponding to a nonlinear dielectric constant of the ferroelectric material just under the probe 11; a detector 34 for detecting data from the demodulated signal by using the coherent detection; and a tracking error detector 35 for detecting a tracking error signal from the demodulated signal.

The probe 11 is a conductive member, or an insulating member coated with a conductive film. The tip portion facing to the ferroelectric material 17 is hemispherical, having a predetermined radius. This radius is an important factor in determining the radius of the polarization formed in the ferroelectric material 17 correspondingly to record data, so it is extremely small, on the order of 10 nm. Data is recorded by applying a voltage between the probe 11 and the electrode 16 to form in the ferroelectric material 17 a domain polarized in a predetermined direction, while the recorded data is picked up on the basis of the capacitance corresponding to the polarization.

The return electrode 12b is an electrode for returning the high-frequency electric field generated by the oscillator 13 and applied to the ferroelectric material 17 from the probe 11, and is placed so as to surround the probe 11. More concretely, the return electrode 12b is provided with the slider 12 shown in FIG. 1 or the conductive film 12a shown in FIG. 2. In the SNDM method, the change of the capacitance corresponding to a nonlinear dielectric constant of the ferroelectric material is directly detected. To detect this change of the capacitance, it is preferable that a compact oscillating circuit is formed on or above one surface of the ferroelectric recording medium. In this example, the oscillating circuit (resonance circuit) is provided with the oscillator 13, the inductor L, the probe 11, and the return electrode 12b. In this oscillating circuit, the high-frequency signal flows from the probe 11 to the return electrode 12b thorough the ferroelectric material 17, as shown in FIG. 13. This route is a part of the oscillating circuit. It is preferable that this route is short in order to reduce noises due to a floating capacitance C0 and the like. The return electrode 12b is disposed so as to surround the probe 11 and the distance between the probe 11 and the return electrode 12b is very short. Therefore, the route that the high-frequency signal flows can be shortened, so that the noises can be reduced.

The inductor L is placed between the probe 11 and the return electrode 12b, and may be formed with a microstripline, for example. The resonance frequency of the resonance circuit containing the oscillator 13, the inductor L, the probe 11 and the return electrode 12b is determined by the inductor L and the capacitance Cs. The inductance of the inductor L is determined so that this resonance frequency, f = 1/2π√LCs, is about 1 GHz, for example. Incidentally, the capacitance factor to determine the resonance frequency f is not only the capacitance Cs but also the floating capacitance C0. However, since the recording / reproducing head of the present invention takes a structure for compact placement in view of the floating capacitance C0, the C0 can be assumed to be practically a constant when reproducing a signal by the SNDM. The resonance frequency f is simply expressed here as a function of the capacitance Cs and the inductor L because what changes the f in the signal reproduction is a capacitance change Δ Cs of the Cs. In fact, however, the capacitance includes the floating capacitance C0, and has implications of Cs + C0.

The change of the capacitance Cs corresponds to the nonlinear dielectric constant of the ferroelectric material 17 located just under the tip of the probe 11. The nonlinear dielectric constant of the ferroelectric material 17 located just under the tip of the probe 11 is determined according to the polarization direction of the ferroelectric material 17 at this part. In the state that data was recorded in the recording area 102 of the ferroelectric material 17, the polarization directions of the ferroelectric material 17 within the recording area 102 are changed and set according to the data (e.g. a bit sequence of the data). Therefore, the change of the capacitance Cs is changed according to the data recorded in the ferroelectric material 17.

The oscillator 13 is an oscillator which oscillates at the frequency determined from the inductor L and the capacitance Cs. The oscillation frequency varies, depending on the change of the capacitance Cs. Therefore, FM modulation is performed correspondingly to the change of the capacitance Cs determined by the polarization domain corresponding to the recorded data. By demodulating this FM modulation, it is possible to read the recorded data.

When the data recorded in the ferroelectric recording medium 1 is reproduced, the probe 11 touches the ferroelectric material 17, or faces to it with a small space. Corresponding to the radius of the tip portion of the probe 11, a polarization domain is defined in the ferroelectric material 17. If the high-frequency signal is applied to this probe 11, a high-frequency electric field is generated in the ferroelectric material 17, and the high-frequency signal returns to the return electrode 12b via the ferroelectric material 17. At this time, the capacitance Cs, which corresponds to a polarization P in the ferroelectric material 17 on or under the tip portion of the probe 11, participates in the resonance circuit made with the inductance L. By this, the oscillation frequency comes to depend on the capacitance Cs. By demodulating an oscillation signal which is FM-modulated on the basis of this capacitance Cs, a detection voltage shown in FIG. 10 is outputted, and the recorded data is reproduced. On the other hand, in data recording, the recording is performed by applying a voltage corresponding to the data between the probe 11 and the electrode 16 and thus determining the polarization direction of the ferroelectric material 17. The voltage applied for the data recording generates an electric field stronger than the coercive electric field of the ferroelectric material 17.

Incidentally, it is also possible to use a plurality of probes 11. In using a plurality of probes, record data and AC signals for coherent detection at the time of reproduction are applied between the respective probe and the electrode 16. In this case, it is preferable to provide a low cut filter in order to prevent the leakage of the signals into the oscillator 13.

The switch 30 is intended to switch the input signal when recording or reproducing. The position of the switch 30 is selected so as to input only the AC signal which is referred to in the detection when reproducing, and so as to input a signal about data and the AC signal when recording.

The recording signal input device 31 converts the data to be recorded in a recording format and adds the accompanying control information, to generate a recording signal. Processing about an error correction, processing of data compression and the like may be performed at this stage.

The AC signal generation device 32 generates an AC signal for coherent detection when recording (monitoring) / reproducing. If there are a plurality of probes 11, the AC signals with different frequencies are applied to the probes separately.

When recording, a recording signal is supplied from the recording signal input device 31 to the electrode 16. By an electric field between the probe 11 and the electrode 16, the polarization of a domain of the ferroelectric material 17 just under the probe 11 is determined. Then, the polarization direction is fixed and becomes record data. Incidentally, the AC signal of the AC signal generation device 32 is superimposed on the recording signal. This is used for monitoring the recorded data which is now recorded while the data recording is performed. The process of monitoring the recorded data is the same as the process of reproducing the recorded data. Namely, the oscillator 13 oscillates at the resonance frequency determined from the inductor L and the capacitance Cs, and the frequency is modulated by the capacitance Cs.

The FM demodulator 33 demodulates the oscillation frequency of the oscillator 13 modulated by the capacitance Cs, and reconstructs a wave form corresponding to the polarized state of a potion on which the probe 11 traces.

The detector 34 performs the coherent detection on the signal demodulated at the FM demodulator 33 with the AC signal from the AC signal generation device 32 as a reference signal and reproduces recorded data. Thus, the recording state can be monitored while the data recording is being performed.

The tracking error detector 35 detects a tracking error signal for controlling the apparatus from the signal demodulated at the FM demodulator 33. The detected tracking error signal is inputted to a tracking mechanism to control the apparatus.

As explained above, the dielectric recording / reproducing apparatus 10 is one example in which the dielectric recording / reproducing head and the tracking method associated with the present invention are applied.

## Claims

1. A dielectric recording / reproducing apparatus comprising:
a ferroelectric recording medium (1); and
a dielectric recording / reproducing head (40a, 40b, 40c) for the ferroelectric recording medium (1), comprising a recording / reproducing probe (11) for recording information in the ferroelectric recording medium (1) as a polarization direction by applying a first electric field to the ferroelectric recording medium (1), and reproducing information recorded in the ferroelectric recording medium (1) by detecting a capacitance corresponding to the polarization direction of the ferroelectric recording medium (1) by applying a second electric field; and a return electrode (12) for returning the second electric field,
**characterized in that**
a tip portion of the recording / reproducing probe (11) has a first width in a longitudinal direction and a second width in a cross direction,
the first width is larger than the second width, and
the first width of the tip portion of the recording / reproducing probe (11) is larger than a width of a track (5) of the ferroelectric recording medium (1).

2. The dielectric recording / reproducing apparatus according to claim 1, **characterized in that** the shape of the cross-section of the tip portion of the recording / reproducing probe (11) is an ellipse or rectangle.

3. The dielectric recording / reproducing apparatus according to claim 1 or 2, **characterized in that** the tip portion of the recording / reproducing probe (11) covers a target track (5), a part of an adjacent track located on one side of the target track (5) and a part of an adjacent track located on the other side of the target track (5).

4. The dielectric recording / reproducing apparatus according to any one of claims 1 to 3, **characterized in that** the recording / reproducing probe (11) has a cantilever shape.

5. The dielectric recording / reproducing apparatus according to any one of claims 1 to 4, **characterized in that** the dielectric recording / reproducing head further comprises a first tracking signal detection electrode (42, 43, 45) for detecting a tracking signal.

6. The dielectric recording / reproducing apparatus according to claim 5, **characterized in that** the first tracking signal detection electrode (42, 43, 45) is placed in front of or behind the recording / reproducing electrode (11), deviating by half a track pitch in one direction along a track width direction.

7. The dielectric recording / reproducing apparatus according to claim 6, **characterized in that** the dielectric recording / reproducing head further comprises a second tracking signal detection electrode (44, 46) for detecting a tracking signal, and the second tracking signal detection electrode is placed in front of or behind the recording / reproducing electrode (11), deviating by half a track pitch in the opposite direction to said one direction.

8. A tracking method of a dielectric recording / reproducing head (40a, 40b, 40c) for a ferroelectric recording medium (1) having tracks (5), a plurality of pits being recorded as a polarization direction in the ferroelectric recording medium (1), **characterized in that** the tracking method comprises the processes of:
obtaining a tracking error signal from adjacent two tracks by detecting the capacitance corresponding to the polarization direction of the ferroelectric recording medium (1) by using a recording / reproducing probe (11); and
performing tracking control on the basis of the obtained tracking error signal,
a tip portion of the recording / reproducing probe (11) has a first width in a longitudinal direction and a second width in a cross direction,
the first width is larger than the second width, and
the first width of the tip portion of the recording / reproducing probe (11) is larger than a width of each of the tracks (5).

9. The tracking method according to claim 8, **characterized in that** the plurality of pits comprises a plurality of first pits each having a first polarity and a plurality of second pits each having a second polarity, the plurality of first pits and the plurality of second pits are alternately arranged on each of the adjacent two tracks, and a location of an arrangement of the plurality of first pits and the plurality of second pits on one of the adjacent two track and a location of an arrangement of the plurality of first pits and the plurality of second pits on the other of the adjacent two tracks are shifted each other at an angle of 90 degrees.

10. The tracking method according to claim 8 or 9, **characterized in that** the tracking error signal is obtained by using a scanning nonlinear dielectric microscopy.

## Patentansprüche

1. Dielektrische Aufzeichnungs-/Wiedergabevorrichtung, welche aufweist:
ein ferroelektrisches Aufzeichnungsmedium (1); und
einen dielektrischen Aufzeichnungs-/Wiedergabekopf (40a, 40b, 40c) für das ferroelektrische Aufzeichnungsmedium (1), welcher aufweist: einen Aufzeichnungs-/Wiedergabetaster (11), um Information in dem ferroelektrischen Aufzeichnungsmedium (1) als eine Polarisationsrichtung aufzuzeichnen, indem ein erstes elektrisches Feld an dem ferroelektrischen Aufzeichnungsmedium (1) aufgebracht wird, und wobei Informationen wiedergegeben werden, welche in dem ferroelektrischen Aufzeichnungsmedium (1) aufgezeichnet sind, indem eine Kapazität entsprechend der Polarisationsrichtung des ferroelektrischen Aufzeichnungsmediums (1) detektiert wird, indem ein zweites elektrisches Feld aufgebracht wird; und eine Gegenelektrode (12), um das zweite elektrische Feld rückzuführen,
**dadurch gekennzeichnet, dass**
ein Spitzenbereich des Aufzeichnungs-/Wiedergabetasters (11) eine erste Breite in Längsrichtung und eine zweite Breite in der Querrichtung aufweist,
wobei die erste Breite größer als die zweite Breite ist, und
wobei die erste Breite des Spitzenbereichs des Aufzeichnungs-/Wiedergabetasters (11) größer als eine Breite einer Spur (5) des ferroelektrischen Aufzeichnungsmediums (1) ist.

2. Dielektrische Aufzeichnungs-/Wiedergabevorrichtung nach Anspruch 1, **dadurch gekennzeichnet, dass** die Form des Querschnitts des Spitzenbereichs des Aufzeichnungs-/Wiedergabetasters (11) eine Ellipse oder ein Rechteck ist.

3. Dielektrische Aufzeichnungs-/Wiedergabevorrichtung nach Anspruch 1 oder 2, **dadurch gekennzeichnet, dass** der Spitzenbereich des Aufzeichnungs-/Wiedergabetasters (11) eine Zielspur (5) überdeckt, wobei ein Teil einer benachbarten Spur auf einer Seite der Zielspur (5) platziert ist und ein Teil einer benachbarten Spur auf der anderen Seite der Zielspur (5) platziert ist.

4. Dielektrische Aufzeichnungs-/Wiedergabevorrichtung nach einem der Ansprüche 1 bis 3, **dadurch gekennzeichnet, dass** der Aufzeichnungs-/Wiedergabetaster (11) die Form eines Auslegers besitzt.

5. Dielektrische Aufzeichnungs-/Wiedergabevorrichtung nach einem der Ansprüche 1 bis 4, **dadurch gekennzeichnet, dass** der dielektrische Aufzeichnungs-/Wiedergabekopf ferner eine erste Spurverfolgungssignal-Detektierelektrode (42, 43, 45) aufweist, um ein Spurverfolgungssignal zu detektieren.

6. Dielektrische Aufzeichnungs-/Wiedergabevorrichtung nach Anspruch 5, **dadurch gekennzeichnet, dass** die erste Spurverfolgungssignal-Detektierelektrode (42, 43, 45) vor oder hinter der Aufzeichnungs-/Wiedergabeelektrode (11) platziert ist, wobei diese um eine halbe Spurteilung in einer Richtung entlang der Richtung einer Spurbreite abweicht.

7. Dielektrische Aufzeichnungs-/Wiedergabevorrichtung nach Anspruch 6, **dadurch gekennzeichnet, dass** der dielektrische Aufzeichnungs-/Wiedergabekopf ferner eine zweite Spurverfolgungssignal-Detektierelektrode (44, 46) aufweist, um ein Spurverfolgungssignal zu detektieren und die zweite Spurverfolgungssignal-Detektierelektrode vor oder hinter der Aufzeichnungs-/Wiedergabeelektrode (11) platziert ist, wobei diese um eine halbe Spurteilung in der entgegengesetzten Richtung zu der vorherigen Richtung abweicht.

8. Spurverfolgungsverfahren eines dielektrischen Aufzeichnungs-/Wiedergabekopfes (40a, 40b, 40c) für ein ferroelektrisches Aufzeichnungsmedium (1), welches Spuren (5) besitzt, wobei eine Vielzahl von Grübchen bzw. Pits als eine Polarisationsrichtung in dem ferroelektrischen Aufzeichnungsmedium (1) aufgezeichnet sind, **dadurch gekennzeichnet, dass** das Spurverfolgungsverfahren die folgenden Prozesse bzw. Vorgänge aufweist:
Erhalten eines Spurverfolgungs- bzw. Rillenfehlersignals von zwei benachbarten Spuren durch Detektieren der Kapazität, welche der Polarisationsrichtung des ferroelektrischen Aufzeichnungsmediums (1) entspricht, indem ein Aufzeichnungs-/Wiedergabetaster (11) benutzt wird; und
Durchführen einer Spursteuerung auf der Basis des erhaltenen Rillenfehlersignals,
wobei ein Spitzenbereich des Aufzeichnungs-/Wiedergabetasters (11) eine erste Breite in Längsrichtung und eine zweite Breite in Querrichtung besitzt,
wobei die erste Breite größer als die zweite Breite ist, und
die erste Breite des Spitzenbereichs des Aufzeichnungs-/
Wiedergabetasters (11) größer als die Breite jeder der Spuren (5) ist.

9. Spurverfolgungsverfahren nach Anspruch 8, **dadurch gekennzeichnet, dass** die Vielzahl der Pits eine Vielzahl von ersten Pits aufweist, welche jeweils eine erste Polarität besitzen, und eine Vielzahl von zweiten Pits aufweist, welche jeweils eine zweite Polarität besitzen, wobei die Vielzahl der ersten Pits und die Vielzahl der zweiten Pits auf jeder der benachbarten zwei Spuren alternativ angeordnet sind, und ein Ort einer Anordnung der Vielzahl der ersten Pits und der Vielzahl der zweiten Pits auf einer der benachbarten zwei Spuren und ein Ort einer Anordnung der Vielzahl von ersten Pits und der Vielzahl von zweiten Pits auf der anderen der zwei benachbarten Spuren gegeneinander um einen Winkel von 90 Grad verschoben sind.

10. Spurverfolgungsverfahren nach Anspruch 8 oder 9, **dadurch gekennzeichnet, dass** das Rillenfehlersignal durch Benutzen eines nicht linearen dielektrischen Scan-Mikroskops erhalten wird.

## Revendications

1. Appareil diélectrique d'enregistrement / de reproduction, comprenant :
un support ferroélectrique d'enregistrement (1) ; et
une tête diélectrique d'enregistrement / de reproduction (40a, 40b, 40c) pour le support ferroélectrique d'enregistrement (1), comprenant une sonde d'enregistrement / de reproduction (11) pour enregistrer des informations dans le support ferroélectrique d'enregistrement (1) en tant que direction de polarisation en appliquant un premier champ électrique au support ferroélectrique d'enregistrement (1), et pour reproduire des informations enregistrées dans le support ferroélectrique d'enregistrement (1), en détectant une capacité correspondant à la direction de polarisation du support ferroélectrique d'enregistrement (1), en appliquant un second champ électrique ; et une électrode de retour (12) pour renvoyer le second champ électrique,
**caractérisé en ce que**
une partie de bout de la sonde d'enregistrement / de reproduction (11) présente une première largeur dans le sens longitudinal et une seconde largeur dans le sens transversal,
la première largeur est supérieure à la seconde largeur, et
la première largeur de la partie de bout de la sonde d'enregistrement / de reproduction (11) est supérieure à la largeur d'une piste (5) du support ferroélectrique d'enregistrement (1).

2. Appareil diélectrique d'enregistrement / de reproduction selon la revendication 1, **caractérisé en ce que** la forme de la section transversale de la partie de bout de la sonde d'enregistrement / de reproduction (11) est une ellipse ou un rectangle.

3. Appareil diélectrique d'enregistrement / de reproduction selon la revendication 1 ou 2, **caractérisé en ce que** la partie de bout de la sonde d'enregistrement / de reproduction (11) couvre une piste cible (5), une zone d'une piste adjacente située d'un côté de la piste cible (5) et une zone d'une piste adjacente située de l'autre côté de la piste cible (5).

4. Appareil diélectrique d'enregistrement / de reproduction selon l'une quelconque des revendications 1 à 3, **caractérisé en ce que** la sonde d'enregistrement / de reproduction (11) présente une forme en porte-à-faux.

5. Appareil diélectrique d'enregistrement / de reproduction selon l'une quelconque des revendications 1 à 4, **caractérisé en ce que** la tête diélectrique d'enregistrement / de reproduction comprend en outre une première électrode de détection de signaux de suivi (42, 43, 45) afin de détecter un signal de suivi.

6. Appareil diélectrique d'enregistrement / de reproduction selon la revendication 5, **caractérisé en ce que** la première électrode de détection de signaux de suivi (42, 43, 45) est placée devant ou derrière la sonde d'enregistrement / de reproduction (11), avec un écart de la valeur d'un demi-pas des pistes dans un sens, suivant le sens de la largeur des pistes.

7. Appareil diélectrique d'enregistrement / de reproduction selon la revendication 6, **caractérisé en ce que** la tête diélectrique d'enregistrement / de reproduction comprend, en outre, une seconde électrode de détection de signaux de suivi (44, 46) afin de détecter un signal de suivi, et la seconde électrode de détection de signaux de suivi est placée devant ou derrière la sonde d'enregistrement / de reproduction (11), avec un écart de la valeur d'un demi-pas des pistes dans la direction opposée audit sens.

8. Procédé de suivi d'une tête diélectrique d'enregistrement / de reproduction (40a, 40b, 40c) pour un support ferroélectrique d'enregistrement (1) comportant des pistes (5), une pluralité de microcuvettes étant enregistrées en tant que direction de polarisation dans le support ferroélectrique d'enregistrement (1), **caractérisé en ce que** le procédé de suivi comprend les étapes de :
obtention d'un signal d'erreur de suivi, à partir de deux pistes adjacentes, en détectant la capacité correspondant à la direction de polarisation du support ferroélectrique d'enregistrement (1), en utilisant une sonde d'enregistrement / de reproduction (11) ; et
exécution d'une commande de suivi sur la base du signal obtenu d'erreur de suivi,
une partie de bout de la sonde d'enregistrement / de reproduction (11) présente une première largeur dans le sens longitudinal et une seconde largeur dans le sens transversal,
la première largeur est supérieure à la seconde largeur, et
la première largeur de la partie de bout de la sonde d'enregistrement / de reproduction (11) est supérieure à la largeur de chacune des pistes (5).

9. Procédé de suivi selon la revendication 8, **caractérisé en ce que** la pluralité de microcuvettes comprend une pluralité de premières microcuvettes ayant chacune une première polarité, et une pluralité de secondes microcuvettes ayant chacune une seconde polarité, la pluralité de premières microcuvettes et la pluralité de secondes microcuvettes étant disposées en alternance sur chacune de deux pistes adjacentes, et un emplacement d'un agencement de la pluralité de premières microcuvettes et de la pluralité de secondes microcuvettes sur l'une des deux pistes adjacentes, ainsi qu'un emplacement d'un agencement de la pluralité de premières microcuvettes et de la pluralité de secondes microcuvettes sur l'autre des deux pistes adjacentes étant décalés de 90 degrés l'un par rapport à l'autre.

10. Procédé de suivi selon la revendication 8 ou 9, **caractérisé en ce que** le signal d'erreur de suivi est obtenu au moyen de la microscopie diélectrique non linéaire à balayage.
